# EUROPEAN PATENT SPECIFICATION

(11) **EP 3 490 048 B1**
(45) Date of publication and mention of the grant of the patent: **30.08.2023**
(21) Application number: 18836156.2
(22) Date of filing: 16.07.2018
(51) Int. Cl.: H01M 4/04, H01M 10/04, H01M 4/02, B21D 5/01, B21D 11/10, B21D 11/20, B21D 53/00, H01M 10/0585

(54) **ELECTRODE ASSEMBLY PREPARATION METHOD**
VERFAHREN ZUR HERSTELLUNG EINER ELEKTRODENANORDNUNG
PROCÉDÉ DE PRÉPARATION D'ENSEMBLE ÉLECTRODE

(30) Priority: 18.07.2017 KR 20170091032; 06.07.2018 KR 20180078967
(43) Date of publication of application: 29.05.2019
(73) Proprietor: LG Energy Solution, Ltd., Seoul 07335 (KR)
(72) Inventor: SHIN, Byung Heon, Daejeon 34122 (KR); KIM, Hyun Tae, Daejeon 34122 (KR); JEONG, Ji Won, Daejeon 34122 (KR)
(74) Representative: Plasseraud IP
(86) International application number: PCT/KR2018/008040
(87) International publication number: WO 2019/017667

(56) References cited:
- WO-A1-2016/208970
- CN-U- 203 228 427
- JP-A- 2016 178 025
- JP-A- 2017 111 879
- KR-A- 20140 098 490
- KR-A- 20150 100 017
- KR-A- 20170 000 368
- KR-A- 20170 001 358
- US-A- 5 428 981
- US-A1- 2014 212 715

## Description

### TECHNICAL FIELD

The present invention relates to a method for manufacturing an electrode, and more particularly, to a method for manufacturing an electrode assembly having a curved surface.

### BACKGROUND ART

Secondary batteries capable of being repeatedly chargeable and dischargeable may be provided in various types. In general, such a secondary battery includes an electrode assembly having a structure in which an electrode and a separator are alternately stacked.

The demand and type of electronic devices are increasing, and in particular, as the demand of electronic devices having an irregular shape, which deviates from the typical simple shape, increases, a secondary battery mounted on an electronic device having an irregular shape is also increasingly required to have an irregular shape.

The secondary battery having the irregular shape may have, for example, a curved surface. The secondary battery having the curved surface is often manufactured so as to form a certain radius of curvature. KR 2015 0100017, WO 2016/208970 and US 2014/212715 disclose method for manufacturing secondary battery having the curved surface.

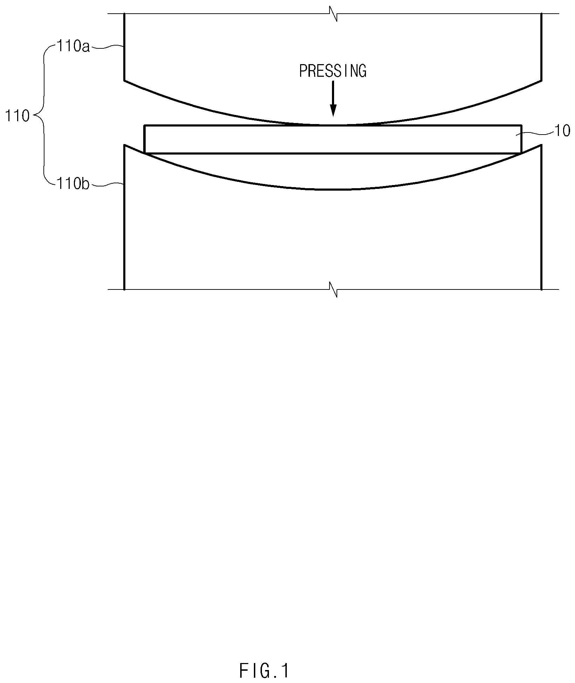

FIG. 1 is a side view illustrating a structure of a pressing device for an electrode assembly according to the related art.

Referring to FIG. 1, a pressing device 110 for an electrode assembly according to the related art may include an upper pressing part 130a disposed above an electrode assembly 10 and a lower pressing part 130b disposed below the electrode assembly 10.

The upper pressing part 130a and the lower pressing part 130b, which constitute the pressing device 110, may press top and bottom surfaces of the electrode assembly 10 to form a curved surface of the electrode assembly. Thus, according to the related art, a surface, which presses the electrode assembly 10, of surfaces of the upper pressing part 130a and the lower pressing part 130b may have a shape corresponding to that of a curved surface to be formed on the electrode assembly. In FIG. 1, a surface, which presses the electrode assembly 10, of the surfaces of the upper pressing part 130a has a convex shape corresponding to a shape of a curved surface to be formed on the electrode assembly, and a surface, which presses the electrode assembly 10, of the surfaces of the lower pressing part 130b has a concave shape corresponding to a shape of a curved surface to be formed on the electrode assembly. However, such a method for forming the curved surface has the following problems.

Generally, the electrode assembly before the curved surface if formed has a flat surface. According to the related art, since the pressing device has a surface corresponding to a curved surface to be formed on the electrode assembly, the pressing device presses only a central surface of the surfaces of the electrode assembly in an initial process of forming the curved surface as illustrated in FIG. 1, and then, the surface of the electrode assembly, which is pressed by the pressing device, is gradually expanded toward both ends of the electrode assembly as the pressing process progresses. However, under such a pressing method, the central surface of the electrode assembly is pressed with large force for a relatively long time, while both the ends of the electrode assembly are pressed with small force for a relatively short time. Thus, the pressure applied to the entire surface of the electrode assembly is not uniform during the formation of the curved surface on the electrode assembly. Thus, there has been a problem that a curved surface having a radius of curvature that is different from a curved surface, which is originally intended to be formed, is formed at both ends of the electrode assembly (it may be understood that the curved surface of the electrode assembly is formed to be relatively flat toward both ends of the electrode assembly). Also, since the surface of the electrode assembly is not uniformly pressed by the pressing device, it is difficult to manufacture the electrode assembly having a uniform radius of curvature because a difference between a radius of curvature at the central portion of the electrode assembly and a radius of curvature at each of both ends of the electrode assembly is large.

### DISCLOSURE OF THE INVENTION

### TECHNICAL PROBLEM

Therefore, an object of the present invention is to manufacture an electrode assembly on which a curved surface having a radius of curvature, which conforms to a radius of curvature that is originally intended to be formed, is formed.

Also, another object of the present invention is to manufacture an electrode assembly on which a curved surface having a uniform radius of curvature is formed by reducing or eliminating a difference between a radius of curvature at a central portion of the electrode assembly and a radius of curvature at each of both ends of the electrode assembly.

### TECHNICAL SOLUTION

According to an aspect of the present invention for achieving the above object, provided is a method for manufacturing an electrode assembly as defined in claim 1. The method includes: a step of preparing an electrode assembly including an electrode and a separator and a pressing unit pressing the electrode assembly; and a pressing step of pressing a top or bottom surface of the electrode assembly by using the pressing unit to form a curved surface on the electrode assembly, wherein the pressing step includes: pressing a plurality of areas, which are spaced apart from each other, on the top or bottom surface of the electrode assembly through the pressing unit without pressing an area between the plurality of areas; and pressing a single area on the top or bottom surface of the electrode assembly, wherein the pressing a plurality of areas and the pressing a single area are separated from each other in time, wherein each of the plurality of areas has a line shape.

The plurality of areas may include a first area and a second area, and in the pressing step, the top or bottom surface of the electrode assembly may be pressed so that the lowermost end and the first area of the electrode assembly are formed in parallel to each other, and the lowermost end and the second area of the electrode assembly are formed in parallel to each other.

In the pressing step, the pressing of the single area on the top or bottom surface of the electrode assembly may be performed after the pressing of the plurality of areas, which are spaced apart from each other, on the top or bottom surface of the electrode assembly through the pressing unit without pressing the area between the plurality of areas.

In the pressing step, the top or bottom surface of the electrode assembly may be pressed so that the lowermost end and the single area of the electrode assembly are formed in parallel to each other, or the lowermost end and of the electrode assembly matches the single area.

The plurality of areas may be symmetrical to each other with respect to the lowermost end of the electrode assembly.

A length of the outermost part of the plurality of parts of the electrode assembly, which are divided by the plurality of areas, may be 5% to 30% of the total length of the electrode assembly.

According to the invention, the length of a middle part of the plurality of parts of the electrode, which are divided by the plurality of areas, is 30% to 90% of the total length of the electrode assembly.

According to another aspect of the present disclosure, it provided is a pressing device for an electrode assembly, the pressing device including: first and second pressing units pressing a top or bottom surface of the electrode assembly, wherein the first pressing unit includes: a plurality of pressing parts contacting a plurality of areas of the electrode assembly to press the plurality of areas; and a recess part which is formed between the pressing parts and does not press the electrode assembly, and the second pressing unit comprises a single pressing part contacting a single area of the electrode assembly to press the single area, wherein an end of at least one of the plurality of pressing parts and the single pressing part has a line shape.

The plurality of pressing part may include a first pressing part and a second pressing part, and the first pressing part and the second pressing part may be disposed in parallel to each other.

A width between the plurality of pressing parts may be 30% to 90% of the total length of the electrode assembly.

### ADVANTAGEOUS EFFECTS

According to the present invention, the electrode assembly on which the curved surface having the radius of curvature, which conforms to the radius of curvature that is originally intended to be formed, is formed may be manufactured.

Also, the electrode assembly on which the curved surface having the uniform radius of curvature is formed by reducing or eliminating a difference between the radius of curvature at the central portion of the electrode assembly and the radius of curvature at each of both ends of the electrode assembly may be manufactured.

### BRIEF DESCRIPTION OF THE DRAWINGS

FIG. 1 is a side view illustrating a structure of a pressing device for an electrode assembly according to the related art.
FIG. 2 is a side view illustrating a structure of a pressing device for an electrode assembly according to an embodiment of the present disclosure.
FIG. 3 is a plan view illustrating an example of a plurality of areas of the electrode assembly, which are pressed by the pressing device for the electrode assembly according to an embodiment of the present disclosure.
FIG. 4 is a plan view illustrating an example of a single area of the electrode assembly, which is pressed by the pressing device for the electrode assembly according to an embodiment of the present disclosure.
FIG. 5 is a side view illustrating a structure of the electrode assembly manufactured by the pressing device for the electrode assembly according to an embodiment of the present disclosure.

### MODE FOR CARRYING OUT THE INVENTION

Hereinafter, a structure of a pressing device for an electrode assembly according to the present disclosure will be described with reference to the accompanying drawings.

In this specification, the term 'pressing' is understood to mean that one constituent applies a pressure to another constituent to deform a shape. Thus, the expression that one constituent presses another constituent does not presuppose that one configuration and another constituent directly come into contact with each other. That is, according to this specification, in the process in which one constituent presses another constituent, further another constituent may be disposed between one constituent and another constituent so that one constituent and another constituent may indirectly come into contact with each other.

### Pressing device for electrode assembly

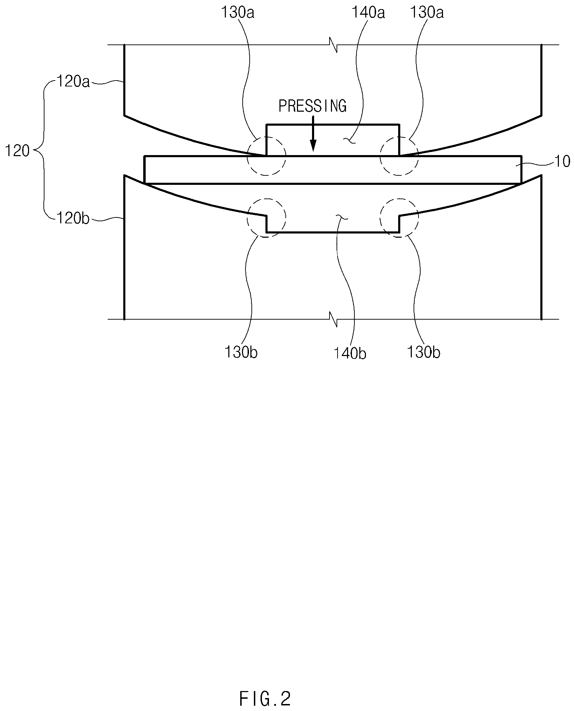

FIG. 2 is a side view illustrating a structure of a pressing device for an electrode assembly according to an embodiment of the present disclosure.

As illustrated in FIG. 2, a pressing device 120 for an electrode assembly according to an embodiment of the present disclosure may include pressing units 120a and 120b, which press a top or bottom surface of the electrode assembly 10 to form a curved surface on the electrode assembly 10. The pressing units may include an upper pressing unit 120a pressing the top surface of the electrode assembly 10 and a lower pressing unit 120b pressing the bottom surface of the electrode assembly 10.

The upper pressing unit 120a may include an upper pressing part 130a contacting and pressing a portion of an area of the electrode assembly at an upper side. Here, the upper pressing part 130a may be provided in plurality. According to the present disclosure, since the upper pressing part 130a is provided in plurality, the area of the electrode assembly 10, which is pressed by the upper pressing part 130a, may also be provided in plurality. Also, although two upper pressing parts 130a are illustrated in FIG. 2, the present disclosure is not limited thereto. For example, three or more upper pressing parts 130a according to the present disclosure may be provided. For convenience of description, the case in which the two upper pressing parts 130a are provided will be described.

The plurality of upper pressing parts 130a according to the present disclosure may be disposed in parallel to each other. Since the plurality of upper pressing parts 130a are provided in parallel to each other, the plurality of areas of the electrode assembly, which are pressed by the plurality of upper pressing pats 130a, may also be disposed in parallel to each other to form a curved surface having a uniform shape.

Also, each of ends of the plurality of upper pressing parts 130a may have an elongated line shape. Thus, as described below, each of the plurality of areas of the top surface of the electrode assembly, which are pressed by the upper pressing part 130a in the pressing step, may have an elongated line shape corresponding to that of each of the ends of the upper pressing part 130a.

Continuously, referring to FIG. 2, an upper recess part 140a having a recessed shape may be provided between the plurality of upper pressing parts 130a of the upper pressing unit 120a according to the present disclosure. According to the present disclosure, as illustrated in FIG. 2, the upper recess part 140a may have a shape that is recessed upward. Thus, while the electrode assembly 10 is pressed by using the upper pressing unit 120a, the upper recess part 140a may be physically spaced apart from the electrode assembly 10 without pressing the electrode assembly 10.

Similar to the upper pressing unit 120a, the lower pressing unit 120b may include a lower pressing part 130b that contacts and presses a portion of the area of the electrode assembly at a lower side of the electrode assembly. Here, the lower pressing part 130b may be provided in plurality. According to the present disclosure, since the lower pressing part 130b is provided in plurality, the area of the electrode assembly 10, which is pressed by the lower pressing part 130b, may also be provided in plurality. Also, although two lower pressing parts 130b are illustrated in FIG. 2, the present disclosure is not limited thereto. For example, three or more lower pressing parts 130b according to the present disclosure may be provided. For convenience of description, the case in which the two lower pressing parts 130b are provided will be described.

The plurality of lower pressing parts 130b according to the present disclosure may be disposed in parallel to each other. Since the plurality of lower pressing parts 130b are provided in parallel to each other, the plurality of areas of the electrode assembly, which are pressed by the plurality of lower pressing pats 130b, may also be disposed in parallel to each other to form a curved surface having a uniform shape.

Also, each of ends of the plurality of lower pressing parts 130b may have an elongated line shape. Thus, as described below, each of the plurality of areas of the bottom surface of the electrode assembly, which are pressed by the lower pressing part 130b in the pressing step, may have an elongated line shape corresponding to that of each of the ends of the lower pressing part 130b.

Continuously, referring to FIG. 2, a lower recess part 140b having a recessed shape may be provided between the plurality of lower pressing parts 130b of the lower pressing unit 120b according to the present disclosure. According to the present disclosure, as illustrated in FIG. 2, the lower recess part 140b may have a shape that is recessed downward. Thus, while the electrode assembly 10 is pressed by using the lower pressing unit 120b, the lower recess part 140b may be physically spaced apart from the electrode assembly 10 without pressing the electrode assembly 10.

Also, a width between the plurality of upper pressing parts 130a and a width between the plurality of lower pressing parts 130b may correspond to each other. For example, a width between the plurality of upper pressing parts 130a and a width between the plurality of lower pressing parts 130b may be the same. According to the present disclosure, since the width between the plurality of upper pressing parts 130a and the width between the plurality of lower pressing parts 130b correspond to each other, the plurality of areas of the top surface of the electrode assembly, which are pressed by the plurality of upper pressing parts, and the plurality of areas of the bottom surface of the electrode assembly, which are pressed by the plurality of lower pressing parts, may correspond to each other to form a curved surface having a uniform shape.

Particularly, when two upper pressing parts 130a are provided, a width between the upper pressing parts 130a may be 30% to 90% of the total length of the electrode assembly to be pressed by the upper pressing parts 130a. Similarly, when two lower pressing parts 130b are provided, a width between the lower pressing parts 130b may be 30% to 90% of the total length of the electrode assembly to be pressed by the lower pressing parts 130b. When the width between the upper pressing parts or the lower pressing parts is less than 30% of the total length of the electrode assembly to be pressed by the upper pressing parts or the lower pressing parts, deformation of the central portion of the electrode assembly may be relatively large, whereas deformation of both ends of the electrode assembly may be relatively small. As a result, the curved surface formed on the electrode assembly may not be uniform, and the curved surface at the central portion may be largely curved. On the other hand, when the width between the upper pressing parts or the lower pressing parts exceeds 90% of the total length of the electrode assembly to be pressed by the upper pressing parts or the lower pressing parts, deformation of the central portion of the electrode assembly may be relatively small, whereas deformation of both ends of the electrode assembly may be relatively large. As a result, the curved surface formed on the electrode assembly may not be uniform, and the curved surface at each of both the ends may be largely curved. On the other hand, when the width between the upper pressing parts or the lower pressing parts is 30% to 90% of the total length of the electrode assembly to be pressed by the upper pressing parts or the lower pressing parts, deformation at the central portion and both ends of the electrode assembly may uniformly occur to form a curved surface having a uniform shape.

For example, when two upper pressing parts 130a are provided, a width between the upper pressing parts 130a may be 30% to 50% or 70% to 90%, more particularly 35% to 45% or 75% to 85% of the total length of the electrode assembly to be pressed by the upper pressing part 130a. This may also be applied to the lower pressing part 130b.

Hereinafter, a method for manufacturing an electrode assembly according to the present disclosure will be described with reference to the accompanying drawings.

### Method for manufacturing electrode assembly

A method for manufacturing an electrode assembly according to the present invention includes a step of preparing an electrode assembly and a pressing unit pressing the electrode assembly and a pressing step of pressing a top or bottom surface of the electrode assembly to form a curved surface on the electrode assembly. Here, in the pressing step, a plurality of areas, which are spaced apart from each other, on the top and bottom surface of the electrode assembly are pressed by using the pressing unit, and an area between the plurality of areas is not pressed.

Each of the plurality of areas pressed in the pressing step has a line shape. Each of an upper pressing part 130a of an upper pressing unit 120a and a lower pressing part 130b of the lower pressing unit 120b, which press the plurality of areas spaced apart from each other on the top or bottom surface of the electrode assembly, may also have an elongated line shape as described above.

The pressing unit may include only one of the upper pressing unit 120a and the lower pressing unit 120b, which are described above, or include all of the upper pressing unit 120a and the lower pressing unit 120b. When the pressing unit includes only the upper pressing unit 120a, the top surface of the electrode assembly may be pressed by the upper pressing unit 120a in the pressing step. When the pressing unit includes only the lower pressing unit 120b, the bottom surface of the electrode assembly may be pressed by the lower pressing unit 120b in the pressing step.

On the other hand, when the pressing unit includes all of the upper pressing unit 120a and the lower pressing unit 120b, the upper pressing unit 120a may press the top surface of the electrode assembly in the pressing step to form a curved surface. However, on the other hand, the lower pressing unit 120b may press the bottom surface of the electrode assembly to form a curved surface.

The pressing of the plurality of areas of the electrode assembly through the pressing unit may be performed by the plurality of upper pressing parts 130a and the plurality of lower pressing parts 130b.

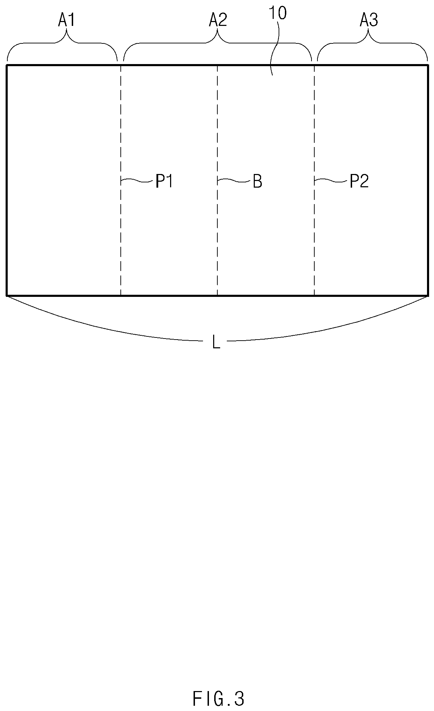

FIG. 3 is a plan view illustrating an example of the plurality of areas of the electrode assembly, which are pressed by the pressing device for the electrode assembly according to an embodiment of the present invention.

As illustrated in FIG. 3, in the pressing step, the plurality of areas of the electrode assembly are pressed. In FIG. 3, two areas of the electrode assembly, which are pressed in the pressing step, are expressed by a dotted line. For convenience of description, a left area of the pressed areas will be called a first area P1, and a right area will be called a second area P2.

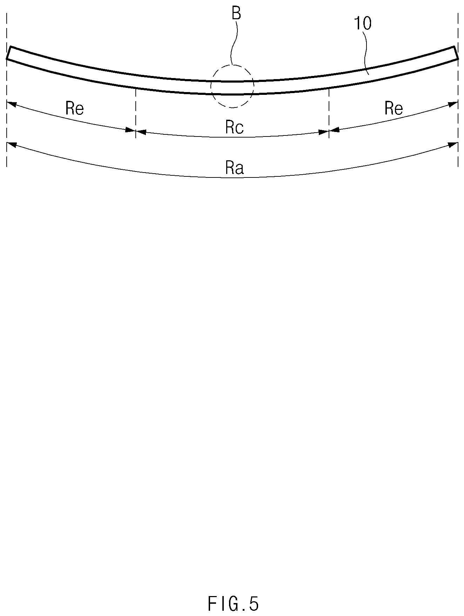

Referring to FIG. 5, a curved surface is formed on the electrode assembly 10 manufactured according to the present invention. The curved surface may have a constant mean curvature radius Rₐ. Locally, a central portion of the curved surface may have a central curvature radius R_{c}, and each of both ends of the curved surface may have an end curvature radius Rₑ. Thus, even if an electrode assembly having the same curvature radius Rₐ is formed, a curved surface having a uniform shape may be formed as a difference between the central curvature radius R_{c} and the end curvature radius Rₑ decreases.

Also, since the curved surface is formed on the electrode assembly, as illustrated in FIG. 5, both ends of the curved surface may be relatively high, and the central portion of the curved surface may be relatively low. In this specification, the lowest point of the central portion of the curved surface may be called the lowermost end B of the electrode assembly.

Here, according to the present invention, in the pressing step, the lowermost end B of the electrode assembly and the plurality of areas of the electrode assembly, which are pressed by the pressing unit may be formed in parallel to each other. That is, as illustrated in FIG. 3, in the pressing step, the first area P1 and the lowermost end B may be formed in parallel to each other, and the second area P2 and the lowermost end P may be formed in parallel to each other. According to the present invention, in the pressing step, since the plurality of areas and the lowermost end of the electrode assembly are formed in parallel to each other, the curved surface having the uniform shape may be formed on the electrode assembly.

Also, as illustrated in FIG. 3, according to the present invention, in the pressing step, the plurality of areas P1 and P2 of the electrode assembly, which are pressed by the pressing unit, may be formed symmetrical to the lowermost end B. Since the plurality of areas of the electrode assembly, which are pressed by the pressing unit, are formed symmetrical to the lowermost end B, the curved surface formed on the electrode assembly may have a shape of which both left and right sides are symmetrical to each other.

Continuously, referring to FIG. 3, the electrode assembly may be divided into a plurality of parts by the plurality of areas P1 and P2 pressed in the pressing step. In FIG. 3, the electrode assembly is divided into three parts A1, A2, and A3 by the two areas P1 and P2.

Here, according to the present invention, a length of the outermost part (the part A1 to A3 in FIG. 3) of the plurality of parts of the electrode assembly 10, which are divided by the plurality of areas, may be 5% to 30% of the total length of the electrode assembly 10. When the length of the outermost part is less than 5% of the total length of the electrode assembly, deformation of the central portion of the electrode assembly may be relatively small, whereas deformation of both ends of the electrode assembly may be relatively large. As a result, the curved surface formed on the electrode assembly may not be uniform, and the curved surface at each of both the ends may be largely curved. When the length of the outermost part exceeds 30% of the total length of the electrode assembly, deformation of the central portion of the electrode assembly may be relatively large, whereas deformation of both ends of the electrode assembly may be relatively small. As a result, the curved surface formed on the electrode assembly may not be uniform, and the curved surface at the central portion may be largely curved.

On the other hand, when the length of the outermost part is 5% to 30% of the total length of the electrode assembly, deformation at the central portion and both the ends of the electrode assembly may uniformly occur to form a curved surface having a uniform shape.

Also, according to the present invention, a length of the middle part (the part A2 in FIG. 3) of the plurality of parts of the electrode assembly 10, which is divided by the plurality of areas, is 30% to 90% of the total length of the electrode assembly 10.

When the length of the middle part is less than 30% of the total length of the electrode assembly, deformation of the central portion of the electrode assembly may be relatively large, whereas deformation of both ends of the electrode assembly may be relatively small. As a result, the curved surface formed on the electrode assembly may not be uniform, and the curved surface at the central portion may be largely curved.

On the other hand, when the length of the middle part exceeds 90% of the total length of the electrode assembly, deformation of the central portion of the electrode assembly may be relatively small, whereas deformation of both ends of the electrode assembly may be relatively large. As a result, the curved surface formed on the electrode assembly may not be uniform, and the curved surface at each of both the ends may be largely curved.

On the other hand, when the length of the middle part is 30% to 90% of the total length of the electrode assembly, deformation at the central portion and both ends of the electrode assembly may uniformly occur to form a curved surface having a uniform shape.

For example, the length of the middle part A2 may be 30% to 50% or 70% to 90%, more particular, 35% to 45% or 75% to 85% of the total length of the electrode assembly.

In the method for manufacturing the electrode assembly according to the present invention, the pressing step further includes pressing a single area on the top or bottom surface of the electrode assembly. That is, according to the present invention, the pressing step may further include pressing a plurality of areas and pressing a single area on the top or bottom surface of the electrode assembly.

Here, according to the present invention, in the pressing step, the pressing of the plurality of areas and the pressing of the single area on the top or bottom surface of the electrode assembly are separated from each other in time. As a result, it is understood that the pressing step according to the present invention is performed in two steps in a time-series manner.

That is, the pressing of the plurality of areas on the top or bottom surface of the electrode assembly may be performed first in time, and then, the pressing of the single area on the top or bottom surface of the electrode assembly may be performed. Alternatively, the pressing of the single area on the top or bottom surface of the electrode assembly may be performed first in time, and then, the pressing of the plurality of areas on the top or bottom surface of the electrode assembly may be performed.

According to the present invention, the step of pressing the top or bottom surface of the electrode assembly to form the curved surface of the electrode assembly includes the pressing of the plurality of areas and the single areas of the electrode assembly to form the curved surface having the more uniform shape. That is, even when the plurality of areas of the electrode assembly are pressed, the portion on which the curved surface having the less uniform shape is formed may be pressed once more to form the curved surface having the more uniform shape.

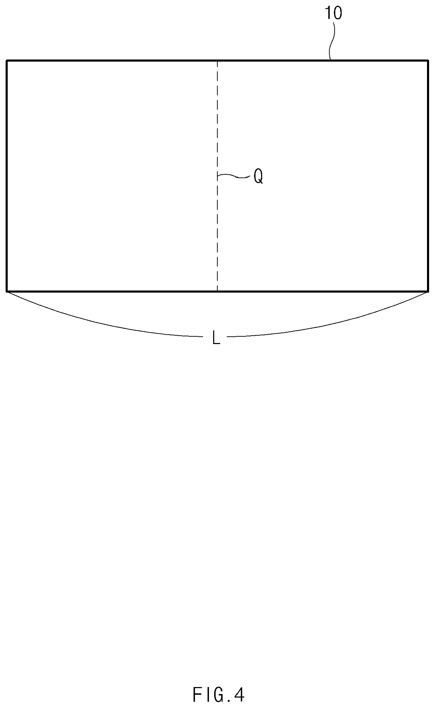

FIG. 4 is a plan view illustrating an example of a single area Q of the electrode assembly, which is pressed by the pressing device for the electrode assembly according to an embodiment of the present invention.

Referring to FIGS. 3 and 4, in the pressing step, the lowermost end B and the single area Q of the electrode assembly 10 may be formed in parallel to each other, or the top or bottom surface of the electrode assembly may be pressed so that the lowermost end B of the electrode assembly 10 matches the signal area Q.

In this specification, the meaning of 'formed in parallel' is a concept that includes a feature in which two constituents are parallel to each other, but it should not be construed to mean only that the two constituents are parallel to each other. That is, the meaning of 'formed in parallel' may be interpreted as meaning that the two constituents are formed so as not to meet each other.

### Example 1

After an electrode assembly having a length of 60 mm and a width of 30 mm, the electrode assembly was pressed by using a pressing device for the electrode assembly to manufacture an electrode assembly having a curved surface. The process of forming the curved surface by pressing the electrode assembly was performed in two step. That is, the curved surface of the electrode assembly was formed through (i) a step of pressing a central portion of a top surface and a central portion of a bottom surface of the electrode assembly, wherein two areas, which are spaced apart from each other in a longitudinal direction of the electrode assembly, of each of the top and bottom surfaces of the electrode assembly are separately pressed (see FIG. 2), and (ii) a step of pressing the entire top and bottom surfaces of the electrode (see FIG. 1).

When the two areas, which are spaced apart from each other in a longitudinal direction of the electrode assembly, of each of the top and bottom surfaces of the electrode assembly are separately pressed, an area of the electrode assembly to be pressed did not exist between the two areas of the electrode assembly to be pressed, and the two areas of the electrode assembly to be pressed was disposed in parallel to each other.

A distance between the two areas of the electrode assembly to be pressed was 80% of the total length of the electrode assembly.

### Example 2

An electrode assembly was manufactured in the same method as Example 1 except that a distance between two areas of an electrode assembly to be pressed on each of top and bottom surfaces of the electrode assembly is 40% of the total length of the electrode assembly.

### Comparative Example

After an electrode assembly having a length of 60 mm and a width of 30 mm, the electrode assembly was pressed by using a pressing device for the electrode assembly to manufacture an electrode assembly having a curved surface.

The pressing device for the electrode assembly according to Comparative Example pressed a top surface of the electrode assembly. When the top surface of the electrode assembly is pressed, an area of the pressing device for the electrode assembly, which contacts the top surface of the electrode assembly, was formed with a curved surface having a constant curvature radius. Thus, in the process of pressing the electrode assembly according to Comparative Example, a pressing range of the pressing device for the electrode assembly was initially limited to a central portion of the top surface of the electrode assembly and then expanded to the peripheral portion of the top surface of the electrode assembly as the formation of the curved surface on the electrode assembly starts.

### Experimental Example

Curvature radii of the electrode assemblies manufactured according to Examples and Comparative Example were measured. The results of the measured curvature radii were summarized in Table 1. In Table 1, a mean curvature radius of the electrode assembly was expressed by Rₐ, a curvature radius at a central portion of the electrode assembly was expressed by R_{c}, and a curvature radius at a peripheral portion of the electrode assembly in a longitudinal direction was expressed by Rₑ. Particularly, a curvature radius of a left peripheral portion of the peripheral portion of the electrode assembly in the longitudinal direction was expressed by Rₑ (left), and a curvature radius of a right peripheral portion was expressed by Re (right).

Table 1 shows measured values of a curvature radius of each of electrode assemblies after the three electrode assemblies manufactured according to Examples and Comparative Example. In Table 1, samples 1 to 3 represent the electrode assemblies manufactured according to Examples and Comparative Example, respectively.

**[Table 1]**

| Curva ture radiu s (mm) | Comparative Example | | | | Example 1 | | | | Example 2 | | | |
|---|---|---|---|---|---|---|---|---|---|---|---|---|
| | Ra | Re (lef t) | Re | Re (rig ht) | Ra | Re (lef t) | Re | Re (rig ht) | Ra | Re (le ft) | Re | Re (rig ht) |
| Sampl e 1 | 204 | 285 | 198 | 310 | 197 | 201 | 197 | 201 | 197 | 199 | 196 | 200 |
| Sampl e 2 | 201 | 304 | 204 | 301 | 199 | 199 | 202 | 198 | 200 | 201 | 200 | 201 |
| Sampl e 3 | 204 | 309 | 206 | 293 | 201 | 203 | 198 | 200 | 198 | 201 | 197 | 198 |
| Mean | 203 | 299. 3 | 202. 7 | 301 | 199 | 201 | 199 | 199. 7 | 198. 3 | 200 .3 | 197. 7 | 199. 7 |

As shown in Table 1, in case of the electrode assembly manufactured according to Comparative Example, it is seen that a difference between the curvature radius at the central portion of the electrode and the curvature radius at the peripheral portion is very large. Although there are some differences depending on the samples, in the case of the electrode assembly manufactured according to Comparative Example, it is seen that the curvature radius at the peripheral portion of the electrode assembly is about 50% greater than that at the central portion.

On the other hands, in the case of the electrode assembly manufactured according to Example 1 or 2, it is seen that a difference between the curvature radius at the central portion and the curvature radius at the peripheral portion is significantly small. Although there are some differences depending on the samples, in the case of the electrode assembly manufactured according to Example 1 or 2, it is seen that a different between the curvature radius at the peripheral portion of the electrode assembly and the curvature radius at the central portion of the electrode assembly is only within 3%.

That is, in the case of all of Examples and Comparative Example, the electrode assembly was manufactured at a curvature radius having a mean curvature radius that is close to 200 mm. However, in the case of Example 1 and 2, when compared to Comparative Example, since the difference between the curvature radius at the central portion of the electrode assembly and the curvature radius at the peripheral portion is remarkably reduced, it is seen that an electrode assembly having a curved surface having a remarkably uniform curvature radius is manufactured.

## Claims

1. A method for manufacturing an electrode assembly (10), the method comprising:
a step of preparing an electrode assembly (10) comprising an electrode and a separator and a pressing unit (120a, 120b) pressing the electrode assembly (10); and
a pressing step of pressing a top or bottom surface of the electrode assembly (10) by using the pressing unit (120a, 120b) to form a curved surface on the electrode assembly (10),
wherein the pressing step comprises:
pressing a plurality of areas, which are spaced apart from each other, on the top or bottom surface of the electrode assembly (10) through the pressing unit (120a, 120b) without pressing an area between the plurality of areas; and
pressing a single area on the top or bottom surface of the electrode assembly (10),
wherein the pressing a plurality of areas and the pressing a single area are separated from each other in time,
wherein each of the plurality of areas has a line shape,
**characterized in that** a length of a middle part of the plurality of parts of the electrode assembly (10), which are divided by the plurality of areas, is 30% to 90% of the total length of the electrode assembly (10).

2. The method of claim 1, wherein the plurality of areas comprise a first area and a second area, and
in the pressing step, the top or bottom surface of the electrode assembly (10) is pressed so that the lowermost end (B) and the first area of the electrode assembly (10) are formed in parallel to each other, and the lowermost end (B) and the second area of the electrode assembly (10) are formed in parallel to each other,
wherein the lowermost end (B) of the electrode assembly (10) is the lowest point of the central portion of curved surface of the electrode assembly (10).

3. The method of claim 1, wherein, in the pressing step, the pressing of the single area on the top or bottom surface of the electrode assembly (10) is performed after the pressing of the plurality of areas, which are spaced apart from each other, on the top or bottom surface of the electrode assembly (10) through the pressing unit (120a, 120b) without pressing the area between the plurality of areas.

4. The method of claim 1, wherein, in the pressing step, the top or bottom surface of the electrode assembly (10) is pressed so that the lowermost end (B) and the single area of the electrode assembly (10) are formed in parallel to each other, or the lowermost end and of the electrode assembly (10) matches the single area,
wherein the lowermost end (B) of the electrode assembly (10) is the lowest point of the central portion of curved surface of the electrode assembly (10).

5. The method of claim 1, wherein the plurality of areas are symmetrical to each other with respect to the lowermost end (B) of the electrode assembly (10),
wherein the lowermost end (B) of the electrode assembly (10) is the lowest point of the central portion of curved surface of the electrode assembly (10).

6. The method of claim 1, wherein a length of the outermost part of the plurality of parts of the electrode assembly (10), which are divided by the plurality of areas, is 5% to 30% of the total length of the electrode assembly.

## Patentansprüche

1. Verfahren zur Herstellung einer Elektrodenanordnung (10), wobei das Verfahren aufweist:
einen Schritt der Vorbereitung einer Elektrodenanordnung (10), die eine Elektrode und einen Separator aufweist, sowie einer Presseinheit (120a, 120b), welche die Elektrodenanordnung (100) presst; und
einen Pressschritt des Pressens einer Ober- oder Unterseite der Elektrodenanordnung (10) mittels der Presseinheit (120a, 120b), um eine gekrümmte Fläche der Elektrodenanordnung (10) zu bilden,
wobei der Pressschritt aufweist:
Pressen mehrerer Flächen, die mit Abstand voneinander angeordnet sind, auf der Ober- oder Unterseite der Elektrodenanordnung (10) durch die Presseinheit (120a, 120b), ohne eine Fläche zwischen den mehreren Flächen zu Pressen; und
Pressen einer Einzelfläche auf der Ober- oder Unterseite der Elektrodenanordnung (10),
wobei das Pressen mehrerer Flächen und das Pressen einer Einzelfläche zeitlich voneinander getrennt sind,
wobei jede der mehreren Flächen eine Linienform hat,
**dadurch gekennzeichnet, dass** eine Länge eines mittleren Teils der mehreren Teile der Elektrodenanordnung (10), die durch die mehreren Flächen unterteilt sind, 30% bis 90% der Gesamtlänge der Elektrodenanordnung (10) beträgt.

2. Das Verfahren von Anspruch 1, wobei die mehreren Flächen eine erste Fläche und eine zweite Fläche aufweisen, und
in dem Pressschritt die Ober- oder Unterseite der Elektrodenanordnung (10) derart gepresst wird, dass das unterste Ende (B) und die erste Fläche der Elektrodenanordnung (10) parallel zueinander ausgebildet werden, und das unterste Ende (B) und die zweite Fläche der Elektrodenanordnung (10) parallel zueinander ausgebildet werden,
wobei das unterste Ende (B) der Elektrodenanordnung (10) der unterste Punkt des mittleren Abschnitts der gekrümmten Fläche der Elektrodenanordnung (10) ist.

3. Das Verfahren von Anspruch 1, wobei in dem Pressschritt das Pressen der Einzelfläche auf der Ober- oder Unterseite der Elektrodenanordnung (10) nach dem Pressen der mehreren Flächen, die mit Abstand voneinander angeordnet sind, auf der Ober- oder Unterseite der Elektrodenanordnung (10) durch die Presseinheit (120a, 120b) durchgeführt wird, ohne die Fläche zwischen den mehreren Flächen zu pressen.

4. Das Verfahren von Anspruch 1, wobei in dem Pressschritt die Ober- oder Unterseite der Elektrodenanordnung (10) derart gepresst wird, dass das unterste Ende (B) und die Einzelfläche der Elektrodenanordnung (10) parallel zueinander ausgebildet werden, oder das unterste Ende und die Elektrodenanordnung (10) zu der Einzelfläche passt,
wobei das unterste Ende (B) der Elektrodenanordnung (10) der unterste Punkt des mittleren Abschnitts der gekrümmten Fläche der Elektrodenanordnung (10) ist.

5. Das Verfahren von Anspruch 1, wobei die mehreren Flächen in Bezug auf das unterste Ende (B) der Elektrodenanordnung (10) zueinander symmetrisch sind,
wobei das unterste Ende (B) der Elektrodenanordnung (10) der unterste Punkt des mittleren Abschnitts der gekrümmten Fläche der Elektrodenanordnung (10) ist.

6. Das Verfahren von Anspruch 1, wobei eine Länge des äußersten Teils der mehreren Teile der Elektrodenanordnung (10), die durch die mehreren Flächen unterteilt sind, 5% bis 30 % der Gesamtlänge der Elektrodenanordnung beträgt.

## Revendications

1. Procédé de fabrication d'un ensemble électrode (10), le procédé comprenant :
une étape de préparation d'un ensemble électrode (10) comprenant une électrode et un séparateur, et une unité de pressage (120a, 120b) pressant l'ensemble électrode (10) ; et
une étape de pressage consistant à presser une surface supérieure ou inférieure de l'ensemble électrode (10) en utilisant l'unité de pressage (120a, 120b) pour former une surface incurvée sur l'ensemble électrode (10),
dans lequel l'étape de pressage comprend :
le pressage d'une pluralité de zones qui sont espacées les unes des autres, sur la surface supérieure ou inférieure de l'ensemble électrode (10) à travers l'unité de pressage (120a, 120b) sans presser une zone entre la pluralité de zones ; et
le pressage d'une zone unique sur la surface supérieure ou inférieure de l'ensemble électrode (10),
dans lequel le pressage d'une pluralité de zones et le pressage d'une zone unique sont séparés l'un de l'autre dans le temps,
dans lequel chacune de la pluralité de zones a une forme de ligne,
**caractérisé en ce qu'**une longueur d'une partie médiane de la pluralité de parties de l'ensemble électrode (10) qui sont divisées par la pluralité de zones fait de 30 % à 90 % de la longueur totale de l'ensemble électrode (10).

2. Procédé selon la revendication 1, dans lequel la pluralité de zones comprennent une première zone et une deuxième zone, et
à l'étape de pressage, la surface supérieure ou inférieure de l'ensemble électrode (10) est pressée de manière à ce que l'extrémité la plus basse (B) et la première zone de l'ensemble électrode (10) soient formées parallèlement l'une à l'autre, et que l'extrémité la plus basse (B) et la deuxième zone de l'ensemble électrode (10) soient formées parallèlement l'une à l'autre,
dans lequel l'extrémité la plus basse (B) de l'ensemble électrode (10) est le point le plus bas de la portion centrale de la surface incurvée de l'ensemble électrode (10).

3. Procédé selon la revendication 1, dans lequel, à l'étape de pressage, le pressage de la zone unique sur la surface supérieure ou inférieure de l'ensemble électrode (10) est réalisé après le pressage de la pluralité de zones qui sont espacées les unes des autres, sur la surface supérieure ou inférieure de l'ensemble électrode (10) à travers l'unité de pressage (120a, 120b), sans presser la zone entre la pluralité de zones.

4. Procédé selon la revendication 1, dans lequel, à l'étape de pressage, la surface supérieure ou inférieure de l'ensemble électrode (10) est pressée de manière à ce que l'extrémité la plus basse (B) et la zone unique de l'ensemble électrode (10) soient formées parallèlement l'une à l'autre, ou que l'extrémité la plus basse de l'ensemble électrode (10) corresponde à la zone unique,
dans lequel l'extrémité la plus basse (B) de l'ensemble électrode (10) est le point le plus bas de la portion centrale de la surface incurvée de l'ensemble électrode (10).

5. Procédé selon la revendication 1, dans lequel la pluralité de zones sont symétriques entre elles par rapport à l'extrémité la plus basse (B) de l'ensemble électrode (10), dans lequel l'extrémité la plus basse (B) de l'ensemble électrode (10) est le point le plus bas de la portion centrale de surface incurvée de l'ensemble électrode (10).

6. Procédé selon la revendication 1, dans lequel une longueur de la partie la plus extérieure de la pluralité de parties de l'ensemble électrode (10) qui sont divisées par la pluralité de zones fait de 5 % à 30 % de la longueur totale de l'ensemble électrode.
